# EUROPÄISCHE PATENTSCHRIFT

(11) **EP 3 072 006 B1**
(45) Veröffentlichungstag und Bekanntmachung des Hinweises auf die Patenterteilung: **07.06.2023**
(21) Anmeldenummer: 14802645.3
(22) Anmeldetag: 21.11.2014
(51) Int. Cl.: G02B 27/01

(54) **ABBILDUNGSOPTIK SOWIE ANZEIGEVORRICHTUNG MIT EINER SOLCHEN ABBILDUNGSOPTIK**
IMAGING OPTICAL UNIT AND DISPLAY DEVICE COMPRISING SUCH AN IMAGING OPTICAL UNIT
OPTIQUE DE REPRODUCTION ET DISPOSITIF D'AFFICHAGE MUNI DE LADITE OPTIQUE D'IMAGERIE

(30) Priorität: 22.11.2013 DE 102013223963
(43) Veröffentlichungstag der Anmeldung: 28.09.2016
(73) Patentinhaber: tooz technologies GmbH, 73430 Aalen (DE)
(72) Erfinder: RUDOLPH, Günter, 07743 Jena (DE); DOBSCHAL, Hans-Jürgen, 99518 Bad Sulza (DE); LINDIG, Karsten, 99084 Erfurt (DE)
(74) Vertreter: Patentanwälte Geyer, Fehners & Partner mbB
(86) Internationale Anmeldenummer: PCT/EP2014/075333
(87) Internationale Veröffentlichungsnummer: WO 2015/075206

(56) Entgegenhaltungen:
- DE-A1-102008 009 095
- DE-A1-102009 010 537
- JP-A- 2002 162 598
- JP-A- 2004 029 544
- US-A1- 2002 041 446
- US-A1- 2013 222 919

## Beschreibung

Die vorliegende Erfindung betrifft eine Abbildungsoptik mit den Merkmalen des Oberbegriffes des Anspruches 1 sowie eine Anzeigevorrichtung mit einer solchen Abbildungsoptik.

Bei solchen Anzeigevorrichtungen ist eine auf den Kopf eines Benutzers aufsetzbare Haltevorrichtung häufig brillenartig ausgebildet. Wenn z.B. das Bilderzeugungsmodul der Anzeigevorrichtung einen Bildgeber mit einer Fläche von 3,5 x 5 mm aufweist, dessen erzeugtes Bild für den Benutzer der Brille als virtuelles Bild in einer Entfernung von 3000 mm unter einem Blickwinkel von 7° x 10° sichtbar sein soll, sollte die Abbildungsoptik eine Brennweite von z.B. 28,5 mm aufweisen. Diese optische Weglänge zusammen mit den Bauvolumina der erforderlichen optischen Bauelemente (wie z.B. Linsen und Prismen) und des Bildgebers sind jedoch so groß, dass sie kaum im Brillenbügel untergebracht werden können. Anders gesagt, die Verwendung herkömmlicher optischer Bauelemente, wie z.B. Linsen und Prismen, für das Abbildungssystem und die entsprechende Anordnung dieser Bauelemente führen zu einem Bauvolumen, das die Gestaltung einer ergonomisch akzeptablen und ästhetisch ansprechenden Anzeigevorrichtung praktisch ausschließt.

JP 2004 029544 A zeigt eine Abbildungsoptik mit den Merkmalen des Oberbegriffs des Anspruchs 1. Die US 2013/222919 A1 sowie die JP 2002 162598 A zeigen jeweils ein Optikelement mit einer Eintrittsfläche und mindestens einer reflektierenden Fläche, wobei das Optikelement geeignet ist, ein über die Eintrittsfläche zugeführtes erzeugtes Bild zu führen, an der reflektierenden Fläche zu reflektieren und über eine Austrittsfläche auszukoppeln. Die DE 10 2008 009 095 A1 zeigt eine Abbildungsoptik für eine auf den Kopf eines Benutzers aufsetzbare und ein Bild erzeugende Anzeigevorrichtung, die ein Optikelement, das eine Eintrittsfläche aufweist, und ein Brillenglas, das einen Einkoppelabschnitt und einen davon beabstandeten Auskoppelabschnitt aufweist, umfasst. Die Abbildungsoptik ist dabei dazu geeignet, das über die Eintrittsfläche dem Optikelemente zugeführte erzeugte Bild im Optikelement zu führen, von diesem in das Brillenglas einzukoppeln, in dem es bis zum Auskoppelabschnitt geführt und über den Auskoppelabschnitt zur Erzeugung eines virtuellen Bildes ausgekoppelt wird. Die US 2002/0041446 A1 zeigt eine Abbildungsoptik für eine auf den Kopf eines Benutzers aufsetzbare und ein Bild erzeugende Anzeigevorrichtung, wobei die Abbildungsoptik eine gekrümmt ausgebildete Reflexionsfläche aufweist. Die DE 10 2009 010 537 A1 beschreibt eine Abbildungsoptik für eine auf den Kopf eines Benutzers aufsetzbare und ein Bild erzeugende Anzeigevorrichtung, wobei die Abbildungsoptik ein Brillenglas mit einem Einkoppelabschnitt und einem davon beabstandetem Auskoppelabschnitt aufweist. Das Brillenglas kann ein eingekoppeltes erzeugtes Bild im Brillenglas bis zum Auskoppelabschnitt führen, der es zur Erzeugung eines virtuellen Bildes auskoppelt.

Ausgehend hiervon ist es daher Aufgabe der Erfindung, eine Abbildungsoptik der eingangs genannten Art so weiterzubilden, dass sie möglichst kompakt ausgebildet werden kann.

Die Erfindung ist im Anspruch 1 sowie im Anspruch 11 definiert. Vorteilhafte Weiterbildungen sind in den abhängigen Ansprüchen angegeben.

Erfindungsgemäß dient die Eintrittsfläche als Reflexionsfläche zur Führung des erzeugten Bildes. Die Reflexion kann z.B. mittels innerer Totalreflexion bewirkt werden. Somit wirkt die Eintrittsfläche transmissiv bei der Einkopplung des erzeugten Bildes und reflektiv bei der Führung des eingekoppelten Bildes. Ferner ist es möglich, die Eintrittsfläche teilreflektiv auszubilden (z.B. durch Aufbringen einer geeigneten Reflexionsschicht).

Durch die erfindungsgemäße Ausbildung des Optikelementes kann die gewünschte räumliche Anpassung bei gleichzeitiger Bereitstellung der notwendigen optischen Weglänge sowie einer abbildenden Funktion erreicht werden. Es sind also nicht mehr mehrere einzelne Linsen, Prismen und sonstige optische Bauelemente notwendig, sondern es wird erfindungsgemäß ein speziell angepasstes Optikelement bereitgestellt, das die notwendigen optischen und mechanischen Randbedingungen erfüllt.

Das Optikelement kann insbesondere einstückig ausgebildet sein. Es ist jedoch auch möglich, dass es mehrstückig ausgebildet ist und die mehreren Teilstücke in direktem Kontakt miteinander stehen (z.B. verkittet oder verklebt), so dass ein einzelnes Optikelement bereitgestellt ist. Das Optikelement ist insbesondere dadurch gekennzeichnet, dass die Führung des erzeugten Bildes bzw. des entsprechenden Lichtes im Optikelement, das z.B. aus Kunststoff oder Glas gebildet sein kann, ohne etwaige Luftspalte erfolgt.

Die Eintrittsfläche des Optikelementes ist bevorzugt plan ausgebildet. Sie kann jedoch alternativ gekrümmt sein.

Ferner kann die Austrittsfläche als Reflexionsfläche zur Führung des erzeugten Bildes dienen. Die Austrittsfläche kann plan oder gekrümmt sein.

Die Reflexion kann z.B. mittels innerer Totalreflexion bewirkt werden. Somit kann die Austrittsfläche reflektiv bei der Führung des eingekoppelten Bildes und transmissiv bei der Auskopplung des erzeugten Bildes wirken. Ferner ist es möglich, die Austrittsfläche teilreflektiv auszubilden (z.B. durch Aufbringen einer geeigneten Reflexionsschicht).

Ferner können die Eintrittsfläche und die Austrittsfläche räumlich zueinander versetzt und um zumindest zwei voneinander unabhängige Raumachsen (bevorzugt um drei voneinander unabhängige Raumachsen) verkippt sein.

Bei der erfindungsgemäßen Abbildungsoptik kann das Optikelement mit seiner Austrittsfläche in direktem Kontakt mit einer entsprechenden Fläche des Brillenglases stehen. Die beiden Flächen können z.B. verkittet oder verklebt sein. Damit wird eine sehr kompakte Ausbildung der Abbildungsoptik bereitgestellt. Ferner kann somit eine dauerhafte Justierung von Optikelement zu Brillenglas gewährleistet werden.

Durch diese Ausbildung wird die Trennung zwischen Brillenglas und Optikelement aufgehoben und es ist nicht mehr notwendig, das erzeugte Bild über eine Grenzfläche des Brillenglases in dieses einzukoppeln, was aufgrund der Brechung an der Grenzfläche des Brillenglases zu sehr angespannten optischen Verhältnissen im Brillenglas führen kann. So kann beispielsweise das Licht unter nahe an der Totalreflexionsgrenze liegenden Winkeln auf die Vorder- und/oder Rückseite des Brillenglases treffen, was nachteilig bei der Führung des Lichtes im Brillenglases und der Auskopplung aus dem Brillenglas ist.

Die Brechung an dieser äußeren Grenzfläche ist nun nicht mehr vorhanden, da das Licht aufgrund des direkten optischen Kontaktes der Austrittsfläche mit der entsprechenden Fläche des Brillenglases einfach im Medium weiterläuft.

Durch diese Kontaktierung des Optikelementes mit dem Brillenglas wird ferner vorteilhaft eine Reduzierung von Falsch- bzw. Streulicht erreicht.

Das Optikelement kann zur Führung des erzeugten Bildes zwischen der Eintritts- und Austrittsfläche eine einzige Reflexion oder auch mehrere Reflexionen bewirken. Bevorzugt werden mindestens zwei, drei, vier, fünf Reflexionen bewirkt. Die Anzahl der Reflexionen liegt bevorzugt im Bereich von zwei bis zehn und wird bevorzugt in Abhängigkeit der Position eines Bildgebers des Bilderzeugungsmoduls und der Brennweite der Abbildungsoptik gewählt.

Ferner kann die Abbildungsoptik bei der erfindungsgemäßen Anzeigevorrichtung so ausgebildet sein, dass die Austrittsfläche des Optikelementes von dem Einkoppelabschnitt des Brillenglases beabstandet ist. Dies ist besonders bevorzugt, wenn die Austrittsfläche gekrümmt ausgebildet ist. Zwischen der Austrittsfläche und dem Brillenglas kann insbesondere ein Luftspalt sein. Das Brillenglas und das Optikelement können zueinander kompatible Verbindungsflächen aufweisen, die die gewünschte mechanische Ausrichtung bzw. Justierung gewährleisten. Die Verbindungsflächen sind insbesondere keine zur optischen Abbildung genutzten Flächen der Abbildungsoptik. Bei den kompatiblen Anschlussflächen kann es sich z.B. um die Innenfläche einer Bohrung und die Außenfläche eines Zylinders handeln. Bevorzugt sind die kompatiblen Anschlussflächen so ausgebildet, dass ein Zusammenstecken möglich ist. Die Verbindungsflächen können in Kontakt stehen und dadurch die gewünschte Justierung von Optikelement zu Brillenglas bewirken. Es ist jedoch auch möglich, dass das Optikelement bzw. die Austrittsfläche des Optikelementes in direktem Kontakt mit dem Brillenglas steht, wobei z.B. die Austrittsfläche mit dem Brillenglas verklebt oder verkittet sein kann. In diesem Fall ist bevorzugt die zumindest eine Reflexionsfläche als gekrümmte Fläche ausgebildet, um die gewünschte abbildende Eigenschaft bereitzustellen.

Bei der erfindungsgemäßen Abbildungsoptik können die Grenzflächen des Optikelements, die nicht zur Führung und/oder Ein- oder Auskopplung des erzeugten Bildes dienen, geschwärzt und/oder absorbierend für Licht sein. Damit wird eine gute Streulichtunterdrückung erreicht.

Das Brillenglas kann eine gekrümmte oder plane Vorderseite sowie eine gekrümmte oder plane Rückseite aufweisen. Der Einkoppelabschnitt und/oder der Auskoppelabschnitt kann eine abbildende Wirkung aufweisen. Ferner kann der Einkoppelabschnitt eine Kollimationswirkung aufweisen. Der Einkoppelabschnitt kann reflektiv, transmissiv und/oder refraktiv sein. Gleiches gilt für den Auskoppelabschnitt.

Bei der erfindungsgemäßen Abbildungsoptik kann das Brillenglas in einem Randbereich den Einkoppelabschnitt aufweisen. Bevorzugt ist die Dicke des Randbereiches größer als die Dicke des Bereiches des Brillenglases, in dem der Auskoppelabschnitt liegt.

Insbesondere kann der Krümmungsverlauf der Vorder- und/oder Rückseite des Brillenglases im Randbereich vom entsprechenden vorbestimmten Krümmungsverlauf der Vorder- und/oder Rückseite im Randbereich so abweichen, dass eine größere Dicke des Brillenglases im Randbereich im Vergleich zu der Dicke im Randbereich vorliegt, die sich durch den vorbestimmten Krümmungsverlauf ergeben würde.

Man nutzt somit die Tatsache aus, dass der gezielt "verdickte" Randbereich ein Bereich ist, der außerhalb des Bereiches liegt, durch den der Benutzer bei einem bestimmungsgemäßen Gebrauch der Abbildungsoptik blickt. Es liegt somit kein Eingriff in das Sehfeld des Benutzers vor, der vom Benutzer als nachteilig angesehen würde. Dies wird z.B. vorteilhaft dazu ausgenutzt, dass durch die Verdickung eine unerwünschte Vignettierung verringert werden kann. Ferner kann beispielsweise erreicht werden, dass die Einfallswinkel bei Führung durch Totalreflexion an Vorder- und Rückseite nicht zu groß werden, wodurch z.B. Astigmatismus und Koma vermieden bzw. verringert werden können.

Insbesondere kann die Gestaltung des Randbereichs zur Verbesserung der optischen Abbildungseigenschaften der Abbildungsoptik eingesetzt werden. Man hat somit mit der möglichen Gestaltung bzw. möglichen Form des Randbereiches einen sehr effizienten Freiheitsgrad bei der optischen Auslegung der Abbildungsoptik. Dieser kann z.B. zur Korrektur von Abbildungsfehlern genutzt werden. Insbesondere kann die Vorderseite und/oder Rückseite im Bereich des Randbereichs die Krümmung einer Freiformfläche aufweisen.

Das Brillenglas und das Optikelement können jeweils z.B. aus Glas oder Kunststoff hergestellt sein.

Bei der erfindungsgemäßen Abbildungsoptik können das Brillenglas und das Optikelement zusammen, in einer Ansicht von oben gesehen, eine L-Form aufweisen. Insbesondere kann das Optikelement von der Rückseite des Brillenglases vorstehen. Dies kann zu der beschriebenen L-Form führen.

Die Führung des erzeugten Bildes im Optikelement und im Brillenglas kann durch Reflexionen und/oder innere Totalreflexionen erfolgen. Falls die Führung durch Reflexionen bewirkt werden soll, sind eventuell reflektierende Beschichtungen oder reflektierende Flächen vorzusehen. Die Reflexionen können an äußeren Grenzflächen des Brillenglases und/oder des Optikelementes (wie z.B. Vorder- und Rückseite des Brillenglases) und/oder an innen liegenden Flächen bewirkt werden.

Der Auskoppelabschnitt ist vom Einkoppelabschnitt, über den das erzeugte Bild vom Optikelement in das Brillenglas eingekoppelt wird, lateral beabstandet. Es findet somit bevorzugt stets zumindest eine Reflexion oder mehrere Reflexionen im Brillenglas (z.B. eine Reflexion an der Vorderseite und eine Reflexion an der Rückseite des Brillenglases) zur Führung des erzeugten Bildes nach der Einkopplung in das Brillenglas bis zum Auskoppelabschnitt statt. Der Auskoppelabschnitt ist somit bevorzugt lateral vom Optikelement beabstandet.

Bei der erfindungsgemäßen Abbildungsoptik kann die Vorderseite und die Rückseite des Brillenglases jeweils einen vorbestimmten Krümmungsverlauf aufweisen, wobei der Krümmungsverlauf der Vorder- und/oder Rückseite des Brillenglases vom entsprechenden vorbestimmten Krümmungsverlauf der Vorder- und/oder Rückseite im Bereich des Einkoppelabschnittes (oder im Randbereich des Brillenglases) so abweichen/abweicht, dass eine größere Dicke des Brillenglases im Bereich des Einkoppelabschnittes (oder im Randbereich des Brillenglases) im Vergleich zur Dicke des Brillenglases im Bereich des Auskoppelabschnittes, im Vergleich zur Dicke des Brillenglases in einem an den Einkoppelabschnitt (oder an den Randbereich) angrenzenden (insbesondere unmittelbar angrenzenden) Bereich des Brillenglases und/oder im Vergleich zur Dicke im Bereich des Einkoppelabschnittes (oder im Randbereich des Brillenglases), die sich durch den vorbestimmten Krümmungsverlauf ergeben würde, vorliegt. Die Abweichung vom vorbestimmten Krümmungsverlauf ist insbesondere dadurch erkennbar, dass die optische Funktion des Brillenglases im Bereich des abweichenden Krümmungsverlaufes verschieden ist zum restlichen Bereich des Brillenglases. Wenn das Brillenglas beispielsweise als Brillenglas ohne optische Wirkung (z.B. ohne Fehlsichtigkeitskorrektur) ausgebildet ist, liegt im Bereich des Einkoppelabschnittes eine nicht gewünschte optische Wirkung vor, die der Betrachter wahrnehmen würde, wenn er durch diesen Bereich blicken würde. Der Einkoppelabschnitt liegt jedoch in einem Bereich des Brillenglases (z.B. im Randbereich), der beim normalen Sehen in der Regel nicht benutzt wird. Wenn das Brillenglas eine Sehfehlerkorrektur bereitstellt, ist diese im Bereich des abweichenden Krümmungsverlaufes nicht oder nicht mehr im gleichen Maße vorhanden.

Der Randbereich beginnt z.B. ab einer Blickrichtung von größer als 20°, 30°, 40° oder 50° (insbesondere bezogen auf die Richtung bei Geradeausblick) beim bestimmungsgemäßen Gebrauch der erfindungsgemäßen Abbildungsoptik.

Bei der erfindungsgemäßen Abbildungsoptik kann die Vorderseite und die Rückseite des Brillenglases jeweils eine sphärische Krümmung aufweisen, wobei die Rückseite im Bereich des Einkoppelabschnittes und/oder im Randbereich des Brillenglases einen von der sphärischen Krümmung abweichenden Krümmungsverlauf aufweisen kann. Somit kann der Bereich des Einkoppelabschnittes und/oder der Randbereich des Brillenglases insbesondere eine größere Dicke als ein an den Einkoppelabschnitt und/oder an den Randbereich angrenzenden (bevorzugt unmittelbar angrenzenden) Brillenglasbereich aufweisen. Es ist jedoch auch möglich, dass die Vorderseite und/oder Rückseite einen nicht sphärischen Krümmungsverlauf aufweist. Dies ist z.B. der Fall, wenn das Brillenglas zur Korrektur einer Fehlsichtigkeit dient.

Der abweichende Krümmungsverlauf kann insbesondere dazu benutzt werden, um die Abbildungsqualität der Abbildungsoptik zu verbessern. Beispielsweise führt die Führung im Brillenglas häufig zu Abbildungsfehlern, die durch die entsprechende Ausbildung des abweichenden Krümmungsverlaufes kompensiert werden kann.

Insbesondere kann die eine reflektierende Fläche des Optikelementes als asphärische Fläche ausgebildet sein. Die asphärische Fläche kann insbesondere keine Rotationssymmetrie aufweisen. Insbesondere kann sie als Freiformfläche ausgebildet sein. Unter einer Freiformfläche wird hier insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist.

Auch die anderen reflektierenden Flächen des Optikelementes und der durch den abweichenden Krümmungsverlauf gebildete Flächenabschnitt können jeweils als asphärische Fläche und insbesondere als Freiformfläche ausgebildet sein.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten, erfindungsgemäßen Abbildungsoptik (einschließlich ihrer erfindungsgemäßen Weiterbildungen) bereitgestellt, wobei die erfindungsgemäße Abbildungsoptik das erzeugte Bild im auf den Kopf aufgesetzten Zustand der Haltevorrichtung so abbildet, dass es der Benutzer als virtuelles Bild wahrnehmen kann.

Bevorzugt ist die erfindungsgemäße Anzeigevorrichtung so ausgebildet, dass zwischen dem Bilderzeugungsmodul und dem Brillenglas keine weiteren optischen Bauelemente (mit oder ohne abbildender Eigenschaft) angeordnet sind. Es ist jedoch möglich, zwischen dem Bilderzeugungsmodul und dem Optikelement einen Umlenkspiegel vorzusehen. Der Umlenkspiegel soll bevorzugt eine reine Umlenkung bewirken und ist daher plan ausgebildet. Es ist jedoch auch möglich, diesen Umlenkspiegel mit einer abbildenden Eigenschaft bereitzustellen, so dass die Spiegelfläche eine vorbestimmte Krümmung aufweist.

Bei der erfindungsgemäßen Anzeigevorrichtung kann die Haltevorrichtung brillenartig ausgebildet sein und einen ersten und einen zweiten Brillenbügel aufweisen, wobei das Optikelement zumindest teilweise in einem der beiden Brillenbügel angeordnet ist.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Insbesondere kann der Bildgeber ein OLED-, ein LCD-, ein LCoS- und/oder ein DotMatrix-Mikrodisplay aufweisen. Ferner kann der Bildgeber ein LED-Segmentdisplay aufweisen. Des Weiteren kann der Bildgeber ein direkt scannendes Laserdisplaymodul (und eventuell mit einer Optik zum Pupillenmatching) aufweisen. Ferner kann der Bildgeber ein scannendes Laserdisplaymodul mit streuendem Medium in einer Zwischenbildebene vor dem Optikteil oder vor dem Brillenglas und einer Optik zum Pupillenmatching aufweisen. Der Bildgeber kann selbstleuchtend oder nicht selbstleuchtend sein.

Das Bilderzeugungsmodul kann insbesondere so ausgebildet sein, dass ein monochromatisches oder ein mehrfarbiges Bild erzeugt wird.

Die erfindungsgemäße Anzeigevorrichtung kann als Datenbrille ausgebildet sein, bei der das erzeugte Bild z.B. darzustellende Daten enthält.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte perspektivische Detailansicht von Fig. 1;
- Fig. 3: eine vergrößerte perspektivische Ansicht des Optikelementes 8 der Anzeigevorrichtung gemäß Fig. 1 und 2;
- Fig. 4: eine vergrößerte Detailschnittansicht der Anzeigevorrichtung von Fig. 1;
- Fig. 5: eine vergrößerte perspektivische Detailansicht der Abbildungsoptik einer weiteren Ausführungsform der erfindungsgemäßen Anzeigevorrichtung;
- Fig. 6: eine vergrößerte perspektivische Ansicht des Optikelementes 8 von Fig. 5;
- Fig. 7: eine Detailschnittansicht in der erfindungsgemäßen Anzeigevorrichtung gemäß Fig. 5;
- Fig. 8: eine schematische Detailschnittansicht einer weiteren Ausführungsform der erfindungsgemäßen Abbildungsoptik;
- Fig. 9: eine schematische Detailschnittansicht einer weiteren Ausführungsform der erfindungsgemäßen Abbildungsoptik, und
- Fig. 10: eine schematische Detailschnittansicht einer weiteren Ausführungsform der erfindungsgemäßen Abbildungsoptik.

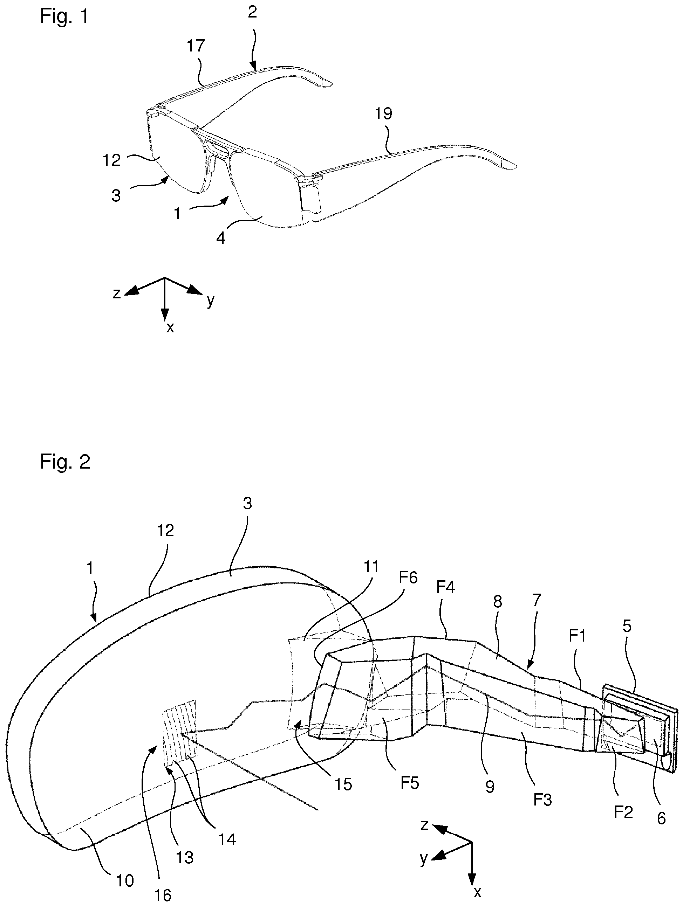

Bei der in Fig. 1 gezeigten Ausführungsform umfasst die erfindungsgemäße Anzeigevorrichtung 1 eine auf den Kopf eines Benutzers aufsetzbare Haltevorrichtung 2, die in der hier beschriebenen Ausführungsform als herkömmliches Brillengestell ausgebildet ist, sowie ein erstes und zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsbild eingespiegelt werden kann, wie nachfolgend beschrieben wird.

Wie am besten aus der vergrößerten perspektivischen Teilansicht in Fig. 2 ersichtlich ist (die Haltevorrichtung 2 ist nicht dargestellt), umfasst die Anzeigevorrichtung 1 ein Bilderzeugungsmodul 5, das einen Bildgeber 6 (z.B. ein OLED-Modul) aufweist, mit dem ein Bild erzeugt werden kann, das als das virtuelle Bild in das Gesichtsfeld des Benutzers eingespiegelt werden soll. Dazu weist die Anzeigevorrichtung 1 eine Abbildungsoptik 7 auf, die ein zwischen dem Bildgeber 6 und dem ersten Brillenglas 3 angeordnetes Optikelement 8 enthält. Des Weiteren dient das erste Brillenglas 3 selbst auch als Teil der Abbildungsoptik 7.

Die Abbildungsoptik 7 ist als solche als erfindungsgemäße Abbildungsoptik 7 ausgebildet und ist bevorzugt für eine auf den Kopf eines Benutzers aufsetzbare und ein Bild erzeugende Anzeigevorrichtung ausgelegt. Die Abbildungsoptik 7 wird hier nur zur Verdeutlichung ihrer erfindungsgemäßen Ausbildung mit der Haltevorrichtung 2 gemäß Fig. 1 beschrieben. Die Abbildungsoptik 7 kann jedoch auch für jede andere Haltevorrichtung ausgelegt werden.

Der Bildgeber 6 ist als flächiger Bildgeber mit einer Vielzahl von z.B. in Spalten und Zeilen angeordneten Pixeln ausgebildet, wobei von jedem Pixel ein Lichtbündel 9 ausgehen kann. Durch eine entsprechende Ansteuerung der Pixel kann das gewünschte Bild erzeugt werden. In Fig. 2 ist stellvertretend für die Lichtbündel 9 der Strahlengang eines Lichtstrahles eingezeichnet, so dass nachfolgend auch von dem Lichtstrahl 9 die Rede ist.

Der vom Bildgeber 6 ausgehende Lichtstrahl 9 tritt über eine plane Eintrittsfläche F1 des Optikelementes 8 in das Optikelement 8 ein und trifft auf eine gegenüberliegende plane Reflexionsfläche F2. Der Lichtstrahl 9 wird von der Reflexionsfläche F2 zur Eintrittsfläche F1 zurückreflektiert und trifft wiederum auf die Eintrittsfläche F1, jedoch an einer anderen Stelle im Vergleich zum Eintritt in das Bilderzeugungsmodul 5 und unter einem solchen Winkel, so dass eine Reflexion des Lichtstrahls 9 aufgrund innerer Totalreflexion zu einer weiteren planen Reflexionsfläche F3 stattfindet. Wie der Darstellung in Fig. 2 zu entnehmen ist, finden weitere Reflexionen an den planen Reflexionsflächen F4 und F5 statt und das Lichtbündel 9 trifft dann auf die transparente Austrittsfläche F6, die gekrümmt ausgebildet ist und somit eine abbildende Wirkung aufweist. Über die Austrittsfläche F6 tritt der Lichtstrahl 9 aus dem Optikelement 8 aus, durchläuft die Luftstrecke bis zur Rückseite 10 des ersten Brillenglases 3 und tritt über die Rückseite 10 in das erste Brillenglas 3 ein.

In dem Brillenglas 3 ist in diesem Bereich eine Reflexionsfläche 11 ausgebildet, die den Lichtstrahl 9 so zur Rückseite 10 umlenkt, dass er an der Rückseite 10 eine innere Totalreflexion durchläuft und zur Vorderseite 12 des ersten Brillenglases reflektiert wird. An der Vorderseite 12 erfolgt ebenfalls eine innere Totalreflexion und nach einer weiteren inneren Totalreflexion an der Rückseite 10 trifft der Lichtstrahl 9 auf eine an der Vorderseite 12 ausgebildete Fresnelfläche 13, die mehrere nebeneinanderliegende reflektive Facetten 14 aufweisen. Die reflektiven Facetten 14 führen zu einer Reflexion in Richtung zur Rückseite 10 in der Art, dass der Lichtstrahl 9 über die Rückseite 10 aus dem Brillenglas 3 austritt und dann vom Benutzer, der die Anzeigevorrichtung 1 bestimmungsgemäß auf dem Kopf trägt, wahrgenommen werden kann.

Aufgrund der beschriebenen Lichtbündelleitung des Optikelementes 8 kann dieses auch als Lichtleiter 8, insbesondere als bilderhaltender und/oder abbildender Lichtleiter, bezeichnet werden.

Der Bereich des ersten Brillenglases 3 mit der Reflexionsfläche 11 kann als Einkoppelabschnitt 15 bezeichnet werden, wobei hier die Reflexionsfläche 11 gekrümmt ausgebildet ist und somit eine abbildende Wirkung aufweist.

Der Bereich mit der Fresnelfläche 13 kann als Auskoppelabschnitt 16 bezeichnet werden, wobei die Facetten 14 hier gekrümmt ausgebildet sein können und somit die Fresnelfläche 13 insgesamt ebenfalls eine abbildende Wirkung aufweisen kann.

Die Rückseite 10 des Brillenglases kann plan oder gekrümmt sein. Insbesondere kann die Rückseite 10 sphärisch gekrümmt sein. Ferner kann die Vorderseite 12 des Brillenglases plan oder gekrümmt sein.

Die Krümmung der Austrittsfläche F6, der Reflexionsfläche 11 und/oder der Facetten 14 kann eine sphärische Krümmung, eine asphärische Krümmung oder die Krümmung einer Freiformfläche sein. Unter einer Freiformfläche wird insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist.

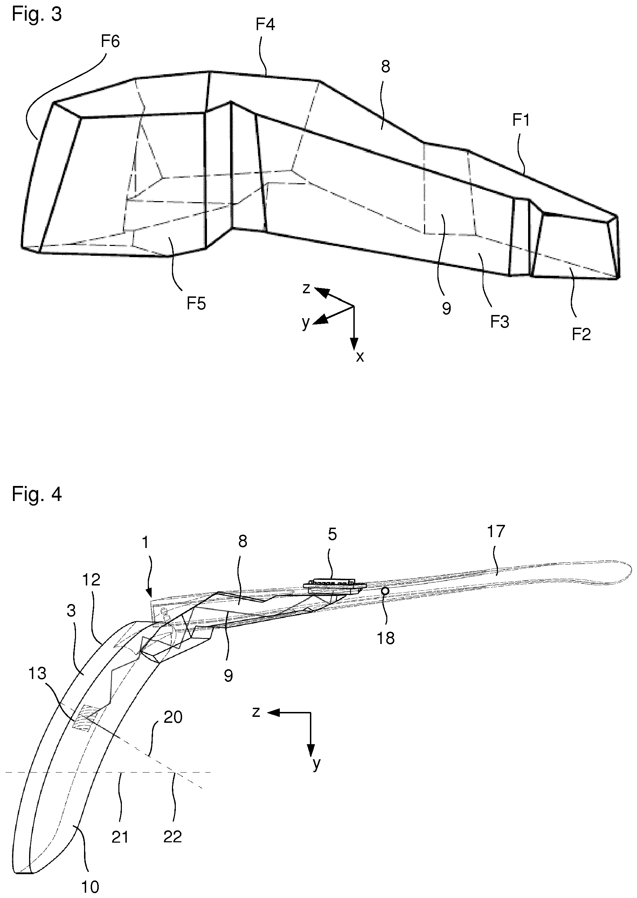

Das Optikelement 8 ist in Fig. 3 alleine nochmals vergrößert dargestellt. Andere Grenz- oder Randflächen des Optikelementes 8 als die beschriebenen Flächen F1-F6 sind geschwärzt und/oder als absorbierende Flächen in der Art ausgebildet, dass auf diese Flächen fallendes Licht absorbiert wird, was zur Streulichtunterdrückung bzw. Falschlichtunterdrückung beiträgt. Bei dem hier beschriebenen Ausführungsbeispiel handelt es sich um 18 absorbierende Grenz- bzw. Randflächen, wobei diese Zahl nicht funktionsbestimmend ist, sondern im Wesentlichen aus der hier vorgesehenen spangebenden Herstellung des Optikelementes 8 rühren. Natürlich kann die Anzahl der absorbierenden Randflächen weniger oder mehr als 18 betragen. Die Flächen sind hier als plane Flächen ausgebildet. Sie können beispielsweise teilweise als gekrümmte Flächen zusammengefasst werden. Bei einem urformenden Fertigungsverfahren (wie z.B. Spritzguss) lässt sich dies leicht realisieren.

Wie insbesondere der schematischen Schnittdarstellung in Fig. 4 entnommen werden kann, ist das Optikelement 8 so ausgebildet, dass es in dem rechten Brillenbügel 17 der Haltevorrichtung 2 eingebaut werden kann. Der rechte Brillenbügel 17 dient dann als Gehäuse für das Optikelement 8. Bei dieser Ausführungsform ist der rechte Brillenbügel 17 fest mit dem rechten Brillenglas 3 verbunden, so dass eine definierte und nicht änderbare mechanische Verbindung und Ausrichtung zwischen dem Optikelement 8 und dem rechten Brillenglas 3 vorliegt. Der rechte Brillenbügel 17 kann ein schematisch dargestelltes Gelenk 18 aufweisen, so dass der hintere Teil des rechten Brillenbügels 17 gegenüber dem vorderen Teil, der das Optikelement 8 enthält, verschwenkt werden kann (hier z.B. um eine Achse die senkrecht zur Zeichenebene von Fig. 4 verläuft).

Wie den Darstellungen in Fig. 1 bis 4 ferner entnommen werden kann, ist der Bildgeber 6 möglichst platzsparend im rechten Brillenbügel 17 angeordnet und erstreckt sich somit einerseits senkrecht zur Zeichenebene gemäß Fig. 4 (x-Richtung) und andererseits im Wesentlichen in Längsrichtung des Brillenbügels 17 (und somit von links nach rechts in Fig. 4 bzw. entlang der z-Richtung). Die Eintrittsfläche F1 des Optikelementes 8 ist im Wesentlichen parallel zum Bildgeber 6 orientiert und erstreckt sich somit auch im senkrecht zur Zeichenebene in Fig. 4 und von links nach rechts in Fig. 4.

Die Austrittsfläche F6 des Optikelementes 8 liegt vor der Rückseite 10 des rechten Brillenglases 3 (möglichst tangential), was dazu führt, dass neben dem räumlichen Versatz zwischen diesen beiden Flächen F1 und F6 auch eine Verkippung um alle drei Raumachsen (x-, y- und z-Achse) vorliegt. Die räumliche Ausdehnung bzw. die Abmessungen des Optikelements 8 sind somit bevorzugt so gewählt, dass es in den rechten Brillenbügel 17 integriert werden kann. Des Weiteren ist das Optikelement 8 so ausgelegt, dass es das mittels des Bildgebers 6 erzeugte Bild in abbildender Weise bis zum Einkoppelabschnitt 15 des rechten Brillenglases 3 überträgt bzw. weiterleitet. Gleichzeitig ist die Krümmung der Austrittsfläche F6 so gewählt, dass sie einen Teil der abbildenden Wirkung der Abbildungsoptik 7 übernimmt. Insbesondere kann das Optikelement 8 einen Hauptteil der Abbildung übernehmen. Auch kann das Optikelement 8 zur Korrektur von Abbildungsfehlern ausgelegt sein, die insbesondere durch die Führung des Bildes bzw. Lichtstrahls 9 im Brillenglas 3 auftritt.

Somit wurden bei der Auslegung des Optikelementes 8 sowohl mechanische als auch optische Randbedingungen berücksichtigt, um ein möglichst optimales Ergebnis zu erzielen.

Der Bildgeber 6 weist hier eine Fläche von 3,5 x 5 mm auf. Die Abbildungsoptik 7 weist eine Brennweite von 28,5 mm auf und erzeugt das virtuelle Bild für den Benutzer in einer Entfernung von 3000 mm unter einem Blickwinkel von 7° x 10°.

Wie Fig. 4 ferner entnommen werden kann, ist die erfindungsgemäße Anzeigevorrichtung 1 so ausgelegt, dass die Blickrichtung 20 zur Erfassung des dargestellten virtuellen Bildes verschieden ist zu der Geradeaus-Blickrichtung 21. Der Augendrehpunkt wird mit dem Bezugszeichen 22 gekennzeichnet.

Natürlich kann die Anzeigevorrichtung 1 auch so ausgebildet sein, dass die Blickrichtung 20 zur Erfassung des virtuellen Bildes mit der Geradeaus-Blickrichtung 21 zusammenfällt.

Das Optikelement 8 ist bevorzugt einstückig ausgebildet und kann aus einem Glasmaterial oder einem Kunststoffmaterial hergestellt sein. Auch das erste und zweite Brillenglas 3, 4 kann aus einem Glasmaterial oder einem Kunststoffmaterial hergestellt sein.

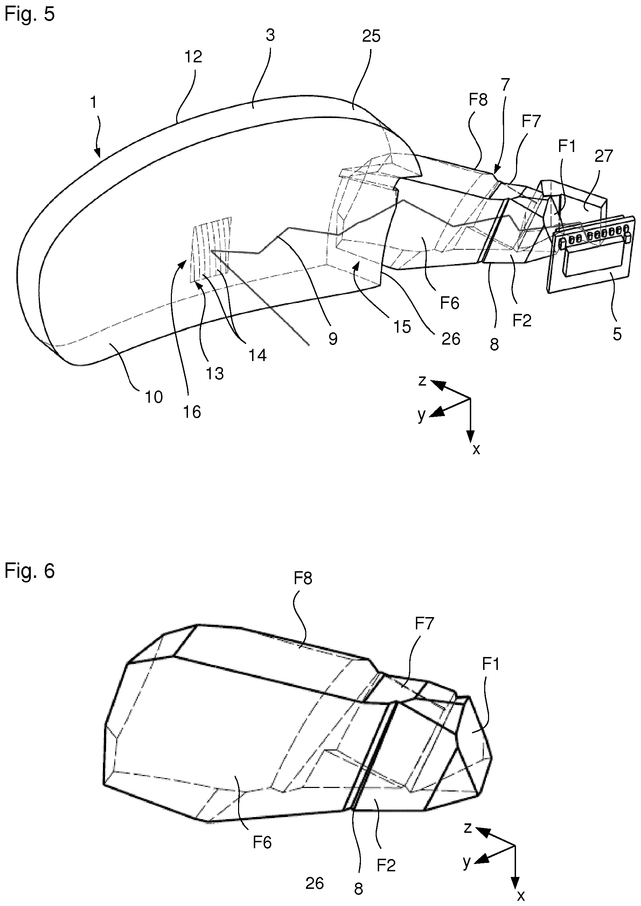

In Fig. 5 bis 7 ist in gleicher Weise wie in Fig. 2 bis 4 eine zweite Ausführungsform der erfindungsgemäßen Anzeigevorrichtung gezeigt, wobei gleiche oder ähnliche Elemente mit gleichen Bezugszeichen bezeichnet sind und zu deren Beschreibung auf die obigen Ausführungen verwiesen wird.

Bei der Ausführungsform gemäß Fig. 5 bis 7 ist das Optikelement 8 anders ausgebildet, da der Einkoppelabschnitt 15 an der die Vorder- und Rückseite 12, 10 verbindenden Randfläche 25 des ersten Brillenglases 3 ausgebildet ist. Dazu ist an der Randfläche 25 eine zylindrische Einkoppelfläche 26 ausgebildet.

Wie dem in Fig. 5 gezeigten Strahlengang zu entnehmen ist, wird der Lichtstrahl 9 über einen Umlenkspiegel 27 auf die plane Eintrittsfläche F1 des Optikelementes 8 gerichtet, so dass der Lichtstrahl 9 über die Eintrittsfläche F1 in das Optikelement 8 eintritt. Im Optikelement 8 finden vier Reflexionen an den Flächen F2, F7, F6, F8 statt und der Lichtstrahl 9 tritt dann über die Austrittsfläche F6 aus dem Optikelement 8 aus, durchläuft die Luftstrecke bis zur zylindrischen Einkoppelfläche 26 des ersten Brillenglases 3, wird in diesem bis zur Fresnelfläche 13 geführt und dann in der beschriebenen Art und Weise über die Rückseite 10 ausgekoppelt.

Die Flächen F2, F7 und F8 sind als Reflexionsflächen ausgebildet, wobei die Fläche F2 eine plane Fläche ist und die Flächen F7 und F8 gekrümmt sind. Insbesondere können sie als Freiformflächen ausgebildet sein. Die plane Fläche F6 dient einerseits als Reflexionsfläche und andererseits als Austrittsfläche, wobei die Reflexion durch innere Totalreflexion erfolgt.

Andere Randflächen des Optikelementes 8 als die beschriebenen Flächen F1, F2, F6-F8 sind geschwärzt und/oder als absorbierende Flächen in gleicher Weise wie bei der Ausführungsform gemäß Fig. 2-4 ausgebildet.

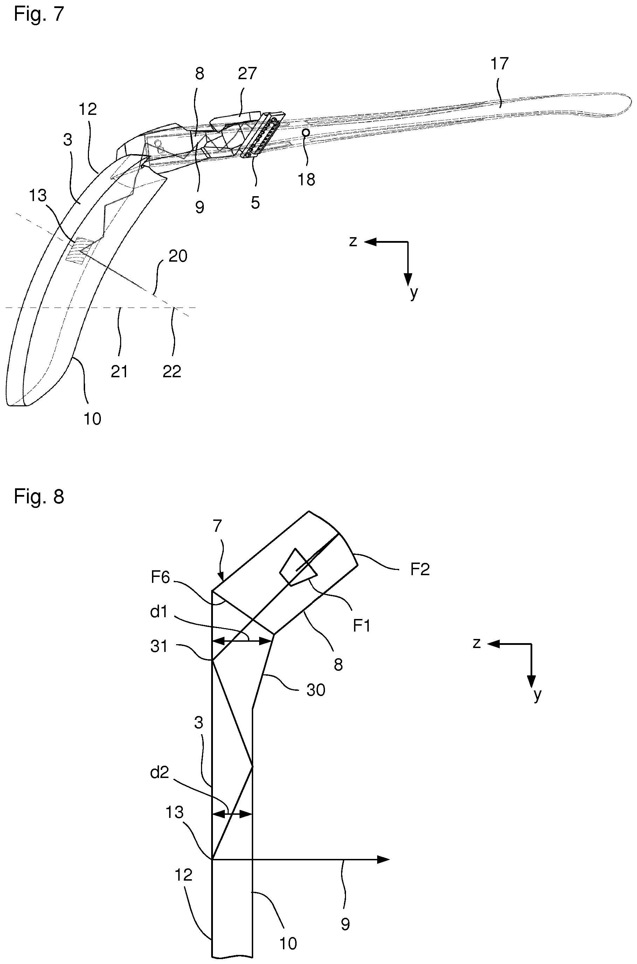

Aufgrund der in den Fig. 5 und 7 gezeigten Orientierung des Bilderzeugungsmoduls 5 ist der Umlenkspiegel 27 zwischen dem Bilderzeugungsmodul 5 und dem Optikelement 8 angeordnet, so dass eine sehr kompakte Ausbildung des Bilderzeugungsmoduls 5 zusammen mit dem Optikelement 8 in Längsrichtung des rechten Brillenbügels 17 möglich ist. Wie ein Vergleich der Fig. 7 und 4 zeigt, ist die Ausdehnung in Längsrichtung des Brillenbügels bei der Ausführungsform gemäß Fig. 7 kürzer als bei der Ausführungsform gemäß Fig. 4.

In Fig. 8 ist in einer stark schematischen Detailschnittansicht eine weitere Ausführungsform der erfindungsgemäßen Abbildungsoptik 7 gezeigt. Die plane Eintrittsfläche F1 ist hier gegenüber der y-z-Ebene gekippt. Zur Verdeutlichung dieser Verkippung ist die eigentlich rechteckförmige Eintrittsfläche F1 trapezförmig dargestellt. Des Weiteren ist wie bei den vorherigen Darstellungen der Lichtstrahl 9 eingezeichnet, der die Lichtführung und -abbildung im Optikelement 8 und im Brillenglas 3 verdeutlichen soll. Der über die Eintrittsfläche F1 eintretende Lichtstrahl 9 wird an der gekrümmten Reflexionsfläche F2 (die hier z.B. sphärisch gekrümmt ist) zur Austrittsfläche F6 reflektiert und tritt durch diese in das Brillenglas 3 ein, in dem eine Führung durch Reflexion an Vorder- und Rückseite 12, 10 bis zur Fresnelfläche 13 stattfindet. Die Auskopplung erfolgt wiederum über die Fresnelfläche 13.

Die Reflexionsfläche F2 kann beispielsweise zur Kollimation der vom Bildgeber ausgehenden Lichtstrahlen dienen. Somit kann beispielsweise auf eine separate kollimierende Einkoppeloptik verzichtet werden, die zwischen Bildgeber und Eintrittsfläche F1 anzuordnen wäre. Es ist jedoch auch möglich, eine solche separate kollimierende Einkoppeloptik vorzusehen.

Wie der Darstellung in Fig. 8 ferner entnommen werden kann, ist die Austrittsfläche F6 direkt mit einer entsprechenden Fläche des Brillenglases 3 verbunden. Die Verbindung kann beispielsweise durch Verkitten oder Verkleben erfolgen. Bevorzugt sind die Austrittsfläche F6 und die entsprechende Fläche des Brillenglases 3 so geformt, dass ein guter flächiger Kontakt hergestellt werden kann. Beispielsweise sind die beiden Flächen als plane Flächen ausgebildet.

Wie in Fig. 8 ferner schematisch angedeutet ist, kann das Brillenglas 3 so ausgebildet sein, dass es in seinem Randbereich 30 (in dem es mit dem Optikelement 8 verbunden ist) eine größere Dicke d1 aufweist im Vergleich zu der restlichen Dicke d2 des Brillenglases. Bei der Darstellung in Fig. 8 sind die Vorder- und Rückseite 12, 10 schematisch als plane Flächen ausgebildet. Sie können jedoch auch gekrümmt sein. In diesem Fall ist im Randbereich 30 ein Krümmungsverlauf vorgesehen, der von dem vorbestimmten Krümmungsverlauf der Vorder- und/oder Rückseite 12, 10 so abweicht, dass eine größere Dicke d1 des Brillenglases im Randbereich 30 im Vergleich zu der Dicke im Randbereich 30 vorliegt, die sich durch den vorbestimmten Krümmungsverlauf ergeben würde. Der Randbereich 30 kann beispielsweise ab einer Blickrichtung von größer als 20°, 30° oder 40° bezogen auf einen Geradeausblick beginnen.

Bei der gezeigten Ausführungsform in Fig. 8 ist somit zwischen dem Optikelement 8 und dem Brillenglas 3 eine Schnittstelle (hier eine plane Schnittstelle) vorgesehen.

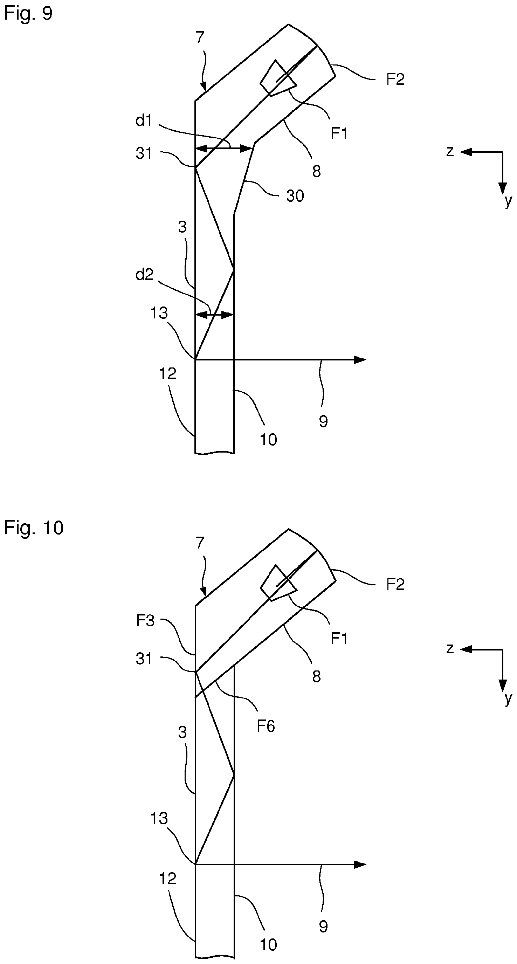

In Fig. 9 ist eine Abwandlung der Abbildungsoptik 7 von Fig. 8 gezeigt. Die Abwandlung in Fig. 9 unterscheidet sich von der Ausführungsform in Fig. 8 darin, dass keine Schnittstelle und somit keine Austrittsfläche F6 vorhanden ist, da die Abbildungsoptik 7 einstückig ausgebildet ist. Man kann auch sagen, dass das Optikelement 8 und das Brillenglas 3 als einstückiges Optikteil ausgebildet sind.

In Fig. 10 ist eine weitere Abwandlung der Abbildungsoptik 7 gemäß Fig. 8 gezeigt. Bei dieser weiteren Abwandlung weist das Brillenglas 3 einerseits keine Randverdickung auf. Andererseits liegt die Schnittstelle, an der das Optikelement 8 mit dem Brillenglas 3 verbunden ist, etwas anders. Die Schnittstelle ist so gelegt, dass im Optikelement 8 zwei Reflexionen stattfinden, so dass dieses neben der Reflexionsfläche F2 noch die weitere Reflexionsfläche F3 aufweist. In der Darstellung von Fig. 10 ist diese Reflexionsfläche F3 als plane Fläche eingezeichnet. Bevorzugt ist sie jedoch gekrümmt ausgebildet. So kann sie eine sphärische Krümmung oder eine Freiformkrümmung aufweisen. Unter einer Freiformkrümmung wird insbesondere eine Krümmung verstanden, die in zwei unterschiedlichen Hauptschnitten unterschiedliche Krümmungen aufweist und/oder die gekrümmt ist und keine Rotationssymmetrie aufweist. Insbesondere kann die Freiformkrümmung nicht sphärisch und nicht rotationssymmetrisch sein.

Natürlich können auch die Ausführungsformen gemäß Fig. 8 und 9 so ausgebildet werden, dass die entsprechende Reflexion an einer gekrümmten Fläche stattfindet. Die Reflexion ist in Fig. 8 und 9 mit dem Bezugszeichen 31 bezeichnet. Das bedeutet, dass in diesem Bereich die Grenzfläche entsprechend gekrümmt ausgebildet sein kann.

Bei den beschriebenen Ausführungsformen, bei denen die Austrittsfläche F6 des Optikelementes 8 mit dem Brillenglas 3 direkt verbunden ist, liegt der Vorteil vor, dass die bisher notwendige Einkopplung in das Brillenglas 3 über eine separate Grenzfläche vermieden wird. Dies führt zu dem Vorteil, dass an der Grenzfläche auftretende Brechungen nicht mehr vorliegen. Das Licht bzw. das Lichtbündel 9 läuft einfach im Medium weiter. Bevorzugt werden für das Optikelement 8 und das Brillenglas 3 das gleiche optische Material verwendet.

Bei den beschriebenen Ausführungsformen der erfindungsgemäßen Anzeigevorrichtung 1 erfolgt die Einspiegelung des virtuellen Bildes in das Gesichtsfeld des Benutzers über das rechte Brillenglas 3. Natürlich ist auch eine Einspiegelung über das linke Brillenglas 4 möglich. In diesem Fall muss lediglich das Optikelement 8 und das Bilderzeugungsmodul 5 im linken Brillenbügel 19 angeordnet werden. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig. Die Brillengläser 3, 4 können eine Brechkraft von Null oder eine von Null verschiedene Brechkraft (insbesondere zur Korrektur von Fehlsichtigkeiten) aufweisen. Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Abbildungsoptik für eine auf den Kopf eines Benutzers aufsetzbare und ein Bild erzeugende Anzeigevorrichtung, mit
einem Optikelement (8), das eine Eintrittsfläche (F1) aufweist, und einem Brillenglas (3, 4), das einen Einkoppelabschnitt (15) und einen davon beabstandeten Auskoppelabschnitt (16) aufweist,
wobei die Abbildungsoptik (7) dazu geeignet ist, das über die Eintrittsfläche (F1) dem Optikelement (8) zugeführte erzeugte Bild im Optikelement (8) zu führen, von diesem in das Brillenglas (3, 4) einzukoppeln, in dem es bis zum Auskoppelabschnitt (16) geführt und über den Auskoppelabschnitt (16) zur Erzeugung eines virtuellen Bildes ausgekoppelt wird,
wobei das Optikelement (8) neben der Eintrittsfläche (F1) mindestens eine reflektierende Fläche (F2, F3, F4, F6; F2, F7, F6, F8), an der das erzeugte Bild zur Führung im Optikelement (8) reflektiert wird, und eine Austrittsfläche (F6), über die das erzeugte Bild aus dem Optikelement (8) ausgekoppelt und zum Auskoppelabschnitt (15) des Brillenglases (3, 4) geführt wird, aufweist,
wobei die Eintrittsfläche (1), die mindestens eine reflektierende Fläche (F2, F3, F4, F6; F2, F7, F6, F8) und/oder die Austrittsfläche (F6) gekrümmt ausgebildet sind/ist, so dass das Optikelement (8) eine abbildende Eigenschaft aufweist,
wobei die Eintrittsfläche (F1) transmissiv zur Einkopplung des erzeugten Bildes in das Optikelement (8) ist,
**dadurch gekennzeichnet, dass**
die Eintrittsfläche (F1) reflektiv zur Reflexion des erzeugten Bildes im Optikelement (8) ist.

2. Abbildungsoptik nach Anspruch 1, **dadurch gekennzeichnet, dass** das Optikelement (8) einstückig ausgebildet ist.

3. Abbildungsoptik nach Anspruch 1 oder 2, **dadurch gekennzeichnet, dass** die Eintrittsfläche (F1) plan ist.

4. Abbildungsoptik nach einem der obigen Ansprüche, **dadurch gekennzeichnet, dass** die Austrittsfläche (F6) reflektiv zur Reflexion des erzeugten Bildes im Optikelement (8) und transmissiv zur Auskopplung des erzeugten Bildes aus dem Optikelement (8) ist.

5. Abbildungsoptik nach einem der obigen Ansprüche, **dadurch gekennzeichnet, dass** die Austrittsfläche (F6) gekrümmt ausgebildet ist.

6. Abbildungsoptik nach einem der obigen Ansprüche, **dadurch gekennzeichnet, dass** die Eintrittsfläche (F1) und die Austrittsfläche (F6) räumlich zueinander versetzt und um zumindest zwei voneinander unabhängige Raumachsen verkippt sind.

7. Abbildungsoptik nach einem der obigen Ansprüche, **dadurch gekennzeichnet, dass** das Optikelement (8) mit seiner Austrittsfläche (F6) in direktem Kontakt mit einer entsprechenden Fläche des Brillenglases (3, 4) steht.

8. Abbildungsoptik nach einem der obigen Ansprüche, **dadurch gekennzeichnet, dass** das Optikelement (8) Grenzflächen aufweist, die nicht zur Führung und/oder Ein- oder Auskopplung des erzeugten Bildes dienen, wobei die Grenzflächen geschwärzt und/oder absorbierend für Licht sind.

9. Abbildungsoptik nach einem der obigen Ansprüche, **dadurch gekennzeichnet, dass** das Optikelement (8) eine erste Verbindungsfläche und das Brillenglas (3, 4) eine zweite Verbindungsfläche aufweist, wobei die beiden Verbindungsflächen in Kontakt stehen, um das Optikelement (8) zum Brillenglas (3, 4) zu positionieren.

10. Abbildungsoptik nach einem der obigen Ansprüche, **dadurch gekennzeichnet, dass** das Brillenglas (3, 4) in einem Randbereich (30) den Einkoppelabschnitt (15) aufweist, wobei der Randbereich eine größere Dicke aufweist als der Bereich des Brillenglases (3, 4), in dem der Auskoppelabschnitt (16) liegt.

11. Anzeigevorrichtung mit
einer auf den Kopf eines Benutzers aufsetzbaren Haltevorrichtung (2),
einem an der Haltevorrichtung erzeugten Bilderzeugungsmodul (5), das ein Bild erzeugt,
und einer an der Haltevorrichtung (2) befestigten Abbildungsoptik (8) nach einem der obigen Ansprüche,
die das erzeugte Bild im auf den Kopf aufgesetzten Zustand der Haltevorrichtung (2) so abbildet, dass es der Benutzer als virtuelles Bild wahrnehmen kann.

12. Anzeigevorrichtung nach Anspruch 11, **dadurch gekennzeichnet, dass** die Haltevorrichtung (2) brillenartig ausgebildet und einen ersten und zweiten Brillenbügel (17, 19) aufweist, wobei das Optikelement (8) zumindest teilweise in einem der beiden Brillenbügel (17, 19) angeordnet ist.

## Claims

1. Imaging optical system for a display device that can be fitted on the head of a user and generates an image, with
an optical element (8), which comprises an entry surface (F1), and a spectacle lens (3, 4), which comprises a coupling-in section (15) and a coupling-out section (16) spaced apart therefrom, wherein the imaging optical system (7) is suitable for guiding the generated image fed to the optical element (8) via the entry surface (F1) in the optical element (8), for coupling it from the latter into the spectacle lens (3, 4), in which it is guided to the coupling-out section (16) and coupled out via the coupling-out section (16) to generate a virtual image,
wherein the optical element (8) comprises, in addition to the entry surface (F1), at least one reflecting surface (F2, F3, F4, F6; F2, F7, F6, F8), on which the generated image is reflected for guiding in the optical element (8), and an exit surface (F6), via which the generated image is coupled out of the optical element (8) and is guided to the coupling-out section (15) of the spectacle lens (3, 4),
wherein the entry surface (1), the at least one reflecting surface (F2, F3, F4, F6; F2, F7, F6, F8) and/or the exit surface (F6) is/are formed curved, with the result that the optical element (8) has an imaging property,
the entry surface (F1) is transmissive for coupling the generated image into the optical element (8),
**characterized in that**
the entry surface (F1) is reflective for reflecting the generated image in the optical element (8).

2. Imaging optical system according to claim 1, **characterized in that** the optical element (8) is formed in one piece.

3. Imaging optical system according to claim 1 or 2, **characterized in that** the entry surface (F1) is flat.

4. Imaging optical system according to one of the above claims, **characterized in that** the exit surface (F6) is reflective for reflecting the generated image in the optical element (8) and transmissive for coupling the generated image out of the optical element (8).

5. Imaging optical system according to one of the above claims, **characterized in that** the exit surface (F6) is formed curved.

6. Imaging optical system according to one of the above claims, **characterized in that** the entry surface (F1) and the exit surface (F6) are spatially offset with respect to each other and are tilted about at least two spatial axes which are independent of each other.

7. Imaging optical system according to one of the above claims, **characterized in that** the optical element (8) is in direct contact with a corresponding surface of the spectacle lens (3, 4) with its exit surface (F6).

8. Imaging optical system according to one of the above claims, **characterized in that** the optical element (8) comprises boundary surfaces which are not used for guiding and/or coupling in or out the generated image, wherein the boundary surfaces are blackened and/or light-absorbing.

9. Imaging optical system according to one of the above claims, **characterized in that** the optical element (8) comprises a first connecting surface and the spectacle lens (3, 4) comprises a second connecting surface, wherein the two connecting surfaces are in contact in order to position the optical element (8) with respect to the spectacle lens (3, 4).

10. Imaging optical system according to one of the above claims, **characterized in that**, in an edge area (30), the spectacle lens (3, 4) comprises the coupling-in section (15), wherein the edge area has a greater thickness than the area of the spectacle lens (3, 4) in which the coupling-out section (16) lies.

11. Display device with
a holder (2) that can be fitted on the head of a user,
an image-generating module (5) produced on the holder, which generates an image,
and an imaging optical system (8) secured to the holder (2) according to one of the above claims, which, when the holder (2) is fitted on the head, images the generated image in such a way that the user can perceive it as a virtual image.

12. Display device according to claim 11, **characterized in that** the holder (2) is formed like a pair of spectacles and comprises a first and second temple stem (17, 19), wherein the optical element (8) is arranged at least partially in one of the two temple stems (17, 19).

## Revendications

1. Optique de reproduction destinée à un dispositif d'affichage pouvant être placé sur la tête d'un utilisateur et générant une image, ladite optique de reproduction comprenant
un élément optique (8), qui comporte une surface d'entrée (F1), et un verre de lunettes (3, 4) qui comporte une portion d'injection par couplage (15) et une portion de sortie par couplage (16) espacée de celle-ci,
l'optique de reproduction (7) étant adaptée pour guider l'image, générée amenée à l'élément optique (8) par le biais de la surface d'entrée (F1), dans l'élément optique (8), l'injecter par couplage depuis ledit élément optique dans le verre de lunettes (3, 4) dans lequel elle est guidée jusqu'à une portion de sortie par couplage (16) et délivrée en sortie par couplage par le biais de la portion de sortie par couplage (16) pour générer une image virtuelle,
l'élément optique (8) comportant à côté de la surface d'entrée (F1) au moins une surface réfléchissante (F2, F3, F4, F6 ; F2, F7, F6, F8) qui réfléchit l'image générée pour la guider dans l'élément optique (8) et une surface de sortie (F6) qui délivre en sortie par couplage l'image générée de l'élément optique (8) et la guider vers la portion de sortie par couplage (15) du verre de lunettes (3, 4),
la surface d'entrée (1), l'au moins une surface réfléchissante (F2, F3, F4, F6 ; F2, F7, F6, F8) et/ou la surface de sortie (F6) étant incurvées de sorte que l'élément optique (8) ait une propriété de reproduction,
la surface d'entrée (F1) étant transmissive pour injecter par couplage l'image générée dans l'élément optique (8),
**caractérisée en ce que**
la surface d'entrée (F1) est réfléchissante pour réfléchir l'image générée dans l'élément optique (8).

2. Optique de reproduction selon la revendication 1, **caractérisée en ce que** l'élément optique (8) est conçu d'une seule pièce.

3. Optique de reproduction selon la revendication 1 ou 2, **caractérisée en ce que** la surface d'entrée (F1) est plane.

4. Optique de reproduction selon l'une des revendications précédentes, **caractérisée en ce que** la surface de sortie (F6) est réfléchissante pour réfléchir l'image générée dans l'élément optique (8) et transmissive pour délivrer en sortie par couplage l'image générée de l'élément optique (8).

5. Optique de reproduction selon l'une des revendications précédentes, **caractérisée en ce que** la surface de sortie (F6) est incurvée.

6. Optique de reproduction selon l'une des revendications précédentes, **caractérisée en ce que** la surface d'entrée (F1) et la surface de sortie (F6) sont spatialement décalées l'une de l'autre et inclinées autour d'au moins deux axes de l'espace indépendants l'un de l'autre.

7. Optique de reproduction selon l'une des revendications précédentes, **caractérisée en ce que** l'élément optique (8) est en contact direct, avec sa surface de sortie (F6), avec une surface correspondante du verre de lunettes (3, 4).

8. Optique de reproduction selon l'une des revendications précédentes, **caractérisée en ce que** l'élément optique (8) comporte des surfaces limites qui ne servent pas à guider et/ou à injecter par couplage ou à délivrer en sortie par couplage l'image générée, les surfaces limites étant noircies et/ou absorbantes pour la lumière.

9. Optique de reproduction selon l'une des revendications précédentes, **caractérisée en ce que** l'élément optique (8) comporte une première surface de liaison et le verre de lunettes (3, 4) comporte une deuxième surface de liaison, les deux surfaces de liaison étant en contact pour positionner l'élément optique (8) par rapport au verre de lunettes (3, 4).

10. Optique de reproduction selon l'une des revendications précédentes, **caractérisée en ce que** le verre de lunettes (3, 4) comporte la portion d'injection par couplage (15) dans une zone de bord (30), la zone de bord étant plus épaisse que la zone du verre de lunettes (3, 4) dans laquelle se trouve la portion de sortie par couplage (16).

11. Dispositif d'affichage comprenant
un dispositif de retenue (2) qui peut être placé sur la tête d'un utilisateur,
un module de génération d'image (5) qui est généré sur le dispositif de retenue et qui génère une image,
et une optique de reproduction (8), qui est fixée au dispositif de retenue (2), selon l'une des revendications précédentes et qui reproduit l'image générée lorsque le dispositif de retenue (2) est placé sur la tête de sorte que l'utilisateur puisse la percevoir comme une image virtuelle.

12. Dispositif d'affichage selon la revendication 11, **caractérisé en ce que** le dispositif de retenue (2) est conçu comme des lunettes et comporte une première et une deuxième branche de lunettes (17, 19), l'élément optique (8) étant disposé au moins en partie dans l'une des deux branches de lunettes (17, 19).
